# EUROPÄISCHE PATENTANMELDUNG

(11) **EP 1 136 706 A1**
(43) Veröffentlichungstag der Anmeldung: **26.09.2001**
(21) Anmeldenummer: 01106370.8
(22) Anmeldetag: 19.03.2001
(51) Int. Cl.: F16B 21/08

(54) **Befestigung einer Scheibe am Ende einer Schraube für eine Schraubklemme**

(30) Priorität: 22.03.2000 DE 10014206
(71) Anmelder: SFS Industrie Holding AG, 9435 Heerbrugg (CH)
(72) Erfinder: Köppel, Michael, 9443 Widnau (CH)
(74) Vertreter: Ludescher, Hans

(57) **Zusammenfassung**

Bei einer Schraube (1) für eine Schraubklemme (2) ist am freien Ende der Schraube (1) ein Schaftabschnitt (8) verringerten Durchmessers vorgesehen, um einen Klemmbügel (3) verschiebesicher, jedoch relativ zur Schraube verdrehbar zu halten. Der Klemmbügel (3) wird vom einen Ende der Schraube (1) her über einen gegenüber dem Schaftabschnitt (8) verringerten Durchmessers größeren Bund (10) aufgeschoben, wobei der Durchmesser des Bundes (10) geringfügig größer ist als der Durchmesser der im Klemmbügel (3) ausgebildeten Öffnung (11).

## Beschreibung

Die Erfindung betrifft eine Schraube für eine Schraubklemme mit einer in einem Schaftabschnitt verringerten Durchmessers in axialer Richtung verschiebesicher, jedoch relativ zur Schraube verdrehbar gehaltenen Scheibe oder einem Klemmbügel sowie ein Verfahren zur Montage einer Scheibe oder eines Klemmbügels am freien Ende einer mit einem Schaftabschnitt verringerten Durchmessers und einem Bund ausgeführten Schraube innerhalb einer Schraubklemme.

Bei Schraubklemmen ist in der Regel am freien Ende der eingesetzten Schraube eine Scheibe oder ein Klemmbügel angeordnet, wobei dieser Klemmbügel innerhalb der Schraubklemme in Achsrichtung der Schraube verschiebbar gehalten ist. Schraube und Klemmbügel sind jedoch relativ zueinander verdrehbar, so daß trotz des nicht drehenden Klemmbügels die Schraube zum Festklemmen eines eingeschobenen Drahtes oder Stabes verdreht werden kann. Eine bekannte Ausgestaltung sieht eine Schraube mit an ihrem freien Ende befestigter, tellerartiger Scheibe vor, wobei diese Scheibe offensichtlich durch Vernieten des freien Endes der Schraube gehalten wird (siehe EP 0 880 197 A).

Es ist dabei festzuhalten, daß die Montage einer Scheibe oder eines Klemmbügels innerhalb der Schraubklemme erfolgen muß, da die Schraube nicht mehr aus der Schraubklemme herausgedreht werden kann, weil eben die Scheibe oder der Klemmbügel in eine nicht mehr lösbare Verbindung mit dem freien Ende der Schraube gebracht werden muß.

Aufgabe der vorliegenden Erfindung ist es, eine Schraube sowie ein Verfahren der eingangs genannten Art zu schaffen, mit welchem eine konstruktiv einfache gegenseitige Befestigung von Schraube und Scheibe oder Klemmbügel erfolgen kann.

Erfindungsgemäß gelingt dies dadurch, daß die Scheibe oder der Klemmbügel vom einen Ende der Schraube her über einen gegenüber dem Schaftabschnitt verringerten Durchmessers größeren Bund aufgeschoben ist, wobei der Durchmesser und/oder der Umfangsverlauf des Bundes geringfügig größer ist als der Durchmesser und/oder der Umfangsverlauf einer in der Scheibe oder dem Klemmbügel ausgebildeten Öffnung.

Durch die vorliegende Erfindung ist es möglich geworden, eine Scheibe oder einen Klemmbügel unter relativ geringem Kraftaufwand in eine optimale Wirkverbindung mit dem freien Ende der Schraube in einer Schraubklemme zu bringen, ohne daß nachträgliche Nietvorgänge oder andere Umformungen notwendig sind. Es bedarf also lediglich einer exakt aufeinander abgestimmten Ausbildung des freien Endes der Schraube und der Öffnung in der Scheibe oder dem Klemmbügel. Sobald die Scheibe oder der Klemmbügel in den Schaftabschnitt verringerten Durchmessers an der Schraube gelangt ist, kann sich die Schraube gegenüber der Scheibe oder dem Klemmbügel frei verdrehen. Es ist trotz der nur geringfügig unterschiedlichen Abmessungen oder des unterschiedlichen Umfangsverlaufes eine ausreichende Verliersicherung für die Scheibe oder den Klemmbügel gegeben, weil keine Kräfte auftreten, die die Scheibe oder den Klemmbügel von der Schraube wegziehen würden.

Weiters wird vorgeschlagen, daß der Schaftabschnitt verringerten Durchmessers wesentlich kleiner ist als der Durchmesser und/oder der Umfangsverlauf des Bundes. Es ist damit gewährleistet, daß der Bund in besonderer Weise auf die Öffnung in der Scheibe oder dem Klemmbügel anpaßbar ist, wobei nach der Montage der Scheibe oder des Klemmbügels eine zumindest in radialer Richtung gesehen lockere Verbindung vorhanden ist, um die Schraube gegenüber der Scheibe oder dem Klemmbügel verdrehen zu können.

Im Rahmen der Erfindung ist es an sich klar, daß der Durchmesser bzw. der Umfangsverlauf des Bundes nicht kleiner sein kann als der Durchmesser bzw. der Umfangsverlauf der Öffnung in der Scheibe oder dem Klemmbügel. Es sind aber grundsätzlich alle Abmessungsvarianten denkbar ab einer genauen Passung bis zu einem entsprechenden Übermaß. Eine vorteilhafte Ausgestaltung sieht vor, daß der Durchmesser des Bundes um bis zu 0,4 mm größer ist als der Durchmesser der Öffnung in der Scheibe oder dem Klemmbügel. Vorteilhaft wird dieser Größenunterschied aber noch geringer gehalten, da es im Wesentlichen darauf ankommt, daß der am freien Ende der Schraube ausgebildete Bund ohne übermäßigen Kraftaufwand die Öffnung in der Scheibe oder dem Klemmbügel durchdringen kann. Durch die Abmessungsunterschiede ist immer gewährleistet, daß die Scheibe oder der Klemmbügel nicht von selbst wieder über den Bund am freien Ende der Schraube herausgeführt werden kann.

Damit ein leichteres Einführen des freien Endes der Schraube in die Öffnung in der Scheibe oder dem Klemmbügel ermöglicht wird, ist vorgesehen, daß an den Bund in Richtung zum freien Ende der Schraube hin eine konische Abfasung anschließt.

Das Einpressen bzw. das Durchdrücken des Bundes am freien Ende der Schraube durch die Öffnung in der Scheibe bzw. dem Klemmbügel hindurch wird dadurch erleichtert, daß der Bund an seinem Außenumfang und/oder die Scheibe oder der Klemmbügel an der Innenbegrenzung der Öffnung mehrere oder eine Vielzahl von Rippen, Riefen, Vertiefungen, Rillen, Ausnehmungen, eine Rändelung oder dergleichen aufweisen. Dadurch wird das Einführen und Durchdrücken des Bundes durch die Öffnung wesentlich erleichert.

Gute Möglichkeiten ergeben sich auch dann, wenn der Bund an der Schraube und/oder die Öffnung an der Scheibe oder am Klemmbügel eine in Achsrichtung gesehen konische Begrenzung aufweisen. Es ist damit eine Art Zentrierung gegeben, wobei erst am unmittelbaren Übergangsbereich beim Durchdrücken des Bundes durch die Öffnung die größte Kraft aufzuwenden ist. Wenn dann unter Umständen noch Kombinationen einer konischen Begrenzung mit entsprechender Ausgestaltung der Oberflächen mit Rippen, Riefen, Vertiefungen, Rillen, Ausnehmungen, einer Rändelung oder dergleichen vorgesehen sind, kann die Wirkung noch verstärkt werden.

Eine weitere Ausführungsvariante sieht vor, daß der Bund an der Schraube gegebenenfalls samt der Abfasung und/oder die Öffnung in der Scheibe oder im Klemmbügel eine unrunde Außenkontur, z.B. nach Art eines Gleichdicks, aufweisen. Auch bei einer solchen Anordnung ist eine relativ geringe Differenz der Abmessungen zwischen dem Bund und der Öffnung in der Scheibe oder dem Klemmbügel erforderlich, wobei praktisch in jedem Verdrehwinkel der Schraube gegenüber der Scheibe und dem Klemmbügel eine ausreichende Überdeckung und somit Verliersicherung für die Scheibe bzw. den Klemmbügel gegeben ist. In diesem Zusammenhang ist es vorteilhaft, wenn der Bund an der Schraube gegebenenfalls samt der Abfasung und/oder die Öffnung in der Scheibe oder im Klemmbügel eine trilobulare Außenkontur aufweisen. Es kann damit auch für diesen Bereich der Schraube eine insbesondere im Gewindebereich bei selbstgewindeformenden Schrauben übliche Außenkontur eingesetzt werden.

Gerade im Hinblick auf eine einfache Montagemöglichkeit und eine dauerhafte gegenseitige Verbindung zwischen Schraube und Scheibe oder Klemmbügel ist es vorteilhaft, wenn der Klemmbügel aus einem federelastischen Material, z.B. aus Federstahl, gefertigt ist.

Eine vorteilhafte Ausgestaltung ist ferner dann gegeben, wenn an der Unterseite der Scheibe oder des Klemmbügels eine Vertiefung zur vollständigen Aufnahme des Bundes an der Schraube samt der gegebenenfalls anschließenden Abfasung ausgebildet ist. Damit ist der Bereich der gegenseitigen Verbindung zwischen Schraube und Scheibe oder Klemmbügel praktisch zur Gänze versenkt angeordnet und hat daher keinen Einfluß auf die schlußendlich in der Schraubklemme zu befestigenden Drähte oder Stäbe. Die gegenseitige Verbindung zwischen Schraube und Scheibe bzw. Klemmbügel ist somit in der gesamten Dicke der Scheibe bzw. des Klemmbügels integriert.

Das Verfahren zur Montage einer Scheibe oder eines Klemmbügels ist dadurch gekennzeichnet, daß die Scheibe oder der Klemmbügel verdrehsicher und in Achsrichtung der Öffnung unter Einsatz eines Hilfswerkzeuges verschiebesicher innerhalb der Schraubklemme entsprechend der endgültigen Lage derselben eingesetzt wird, daß die Schraube mit ihrem Gewindeabschnitt in eine an einem Klemmkörper der Schraubklemme vorgesehene Gewindebohrung eingedreht wird, und daß der Bund der Schraube durch Drehen der Schraube und somit mit einem der Gewindesteigung entsprechenden Vorschub in die Öffnung des Klemmbügels so weit eingedrückt wird, bis die Scheibe oder der Klemmbügel mit seiner Öffnung in dem Schaftabschnitt verringerten Durchmessers hinter dem Bund einrastet.

Durch das erfindungsgemäße Verfahren ist eine schnelle und einfache Montage zwischen Schraube und Scheibe oder Klemmbügel gewährleistet, ohne daß zusätzliche Bearbeitungsstationen eingeschaltet werden müssen. Das Gewinde zum Eindrehen der Schraube im Bereich des Klemmkörpers der Schraubklemme ist ja von vorneherein vorhanden. Die Schraube muß auf jeden Fall in dieses Gewinde eingedreht werden und auch die Montage der Scheibe bzw. des Klemmbügels muß innerhalb der Schraubklemme erfolgen, weil ja eine gegenseitige Wirkverbindung zwischen Schraube und Scheibe oder Klemmbügel geschaffen werden soll.

Durch einfaches Anziehen der Schraube gelangt der am freien Ende der Schraube ausgebildete Bund in die Öffnung der innerhalb der Schraubklemme festgehaltenen Scheibe bzw. des Klemmbügels und wird infolge des Vorschubes im Rahmen der Gewindesteigung in die Öffnung hineingedrückt. Die Axialkraft beim Eindrehen der Schraube in das Gewinde reicht aus, um den am freien Ende der Schraube ausgebildeten Bund durch die Öffnung in der Scheibe oder dem Klemmbügel hindurchzudrücken.

Durch die vorliegende Erfindung ist also die Möglichkeit geschaffen worden, allein bei der an sich notwendigen Montage und gegenseitigen Zuordnung von Klemmkörper, Schraube sowie Scheibe bzw. Klemmbügel auch gleichzeitig eine gegenseitige Wirkverbindung zwischen Schraube und Scheibe bzw. Klemmbügel herzustellen.

Gemäß einem weiteren Verfahrensschritt wird vorgesehen, daß die Schraube nach dem Einrasten der Scheibe oder des Klemmbügels in dem Schaftabschnitt verringerten Durchmessers bis zum Lösen des Anpreßdruckes an einem eingesetzten Hilfswerkzeug zurückgedreht und dann das Hilfswerkzeug herausgezogen wird.

Dieses Hilfswerkzeug ist also nur erforderlich zur axialen Festlegung der Scheibe oder des Klemmbügels vor der Verbindung mit dem freien Ende der Schraube. Es wird somit eine Art Gegenhaltekraft erzeugt, als ob hier bereits ein Draht oder ein Stab in die Schraubklemme eingeschoben worden wäre. Nach der gegenseitigen Verbindung zwischen Schraube und Scheibe oder Klemmbügel muß also lediglich noch die Schraube gelöst werden, wobei dann das Hilfswerkzeug herausgezogen werden kann. Es ist dann die Schraubklemme bereits fertig vorbereitet, so daß dann anschließend unmittelbar ein Einsatz möglich wäre, da bereits die erforderliche freie Öffnung zum Einschieben eines Drahtes oder eines Stabes vorgegeben ist.

Weitere erfindungsgemäße Merkmale und besondere Vorteile werden in der nachstehenden Beschreibung anhand der Zeichnungen noch näher erläutert. Es zeigen:
- Fig. 1: einen Vertikalschnitt durch eine Schraubklemme mit eingesetztem Draht;
- Fig. 2: eine vergrößerte Darstellung des Bereiches der gegenseitigen Verbindung des freien Endes der Schraube mit dem Klemmbügel;
- Fig. 3: das freie Ende einer Schraube sowie einen Teilbereich eines Klemmbügels in einer vor dem Zusammenfügen vorbereiteten Stellung dargestellt;
- Fig.4 und Fig. 5: Ansichten des freien Endes einer Schraube in Pfeilrichtung IV bzw. V in Fig. 3 gesehen;
- Fig. 6: die Darstellung eines Teilbereiches eines Klemmbügels mit einer besonderen Ausbildung der Öffnung;
- Fig. 7: eine Teilansicht eines Klemmbügels von unten;
- Fig. 8: eine Ansicht auf das freie Ende einer Schraube mit besonderer konstruktiver Ausgestaltung eines hier vorgesehenen Bundes.

Bei der vorliegenden Erfindung geht es im Wesentlichen um eine Schraube 1 für eine Schraubklemme 2, welche innerhalb der Schraubklemme 2 mit einem Klemmbügel 3 in Wirkverbindung steht und an sich zum Festklemmen eines Drahtes 4 oder eines entsprechenden Stabes hauptsächlich im Bereich der Elektroindustrie eingesetzt werden kann.

Im Rahmen der Erfindung ist es auch möglich, auf diese Art und Weise Schraubklemmen für andere Einsatzbereiche auszugestalten bzw. eine Verbindung zwischen einer Schraube und einem Klemmbügel oder grundsätzlich einer Schraube und einer Scheibe zu schaffen, wo zwischen dem Antriebsende einer Schraube, also z.B. einem Schraubenkopf 5, und einer am freien Ende der Schraube fixierten Scheibe oder einem Klemmbügel eine mit einer Gewindebohrung versehene Halterung 6 angeordnet wird. Es geht also um konstruktive Maßnahmen, die eingesetzt werden können, wenn Schrauben in irgendeinen Teil eingedreht werden müssen und dann nach dem Eindrehen an der Rückseite dieses Teiles mit einer Scheibe oder einem Klemmbügel 3 in Wirkverbindung gebracht werden müssen.

In der nachstehenden Beschreibung wird nurmehr davon ausgegangen, daß es sich um eine Schraubklemme 2 handelt. Es ist dabei auch gleichgültig, ob nun die Schraube 1 einen Schraubenkopf 5 aufweist oder eben ohne einen Schraubenkopf ausgeführt ist und lediglich mit einem Innenangriff versehen wird.

Die Schraube 1 ist mit einem Anschlagende 7 ausgestattet, an welchem sich der Klemmbügel 3 beim Festklemmen eines Drahtes 4 in axialer Richtung abstützen kann. Die Schraube 1 weist ferner einen Schaftabschnitt 8 verringerten Durchmessers auf, wobei in der dadurch gebildeten Nut 9 der Klemmbügel 3 nach der Montage verschiebesicher, jedoch relativ zur Schraube 1 verdrehbar gehalten ist.

An den Schaftabschnitt 8 verringerten Durchmessers anschließend ist ein im Durchmesser größerer Bund 10 ausgebildet, welcher die Nut 9 in Richtung zum freien Ende der Schraube begrenzt. Der Durchmesser D1 des Bundes 10 ist geringfügig größer ausgebildet als der Durchmesser D2 der Öffnung 11 im Klemmbügel 3. Der Durchmesserunterschied zwischen dem Bund 10 und der Öffnung 11 kann praktisch von Null ausgehen bis zu einer Größe, die es noch ermöglicht, den Bund 10 durch die Öffnung 11 hindurchdrücken zu können. An sich würde schon eine Art Passung zwischen den Abschnitten des Bundes 10 und der Öffnung 11 ausreichen. Es bedarf dann eines entsprechenden - wenn auch geringen - Kraftaufwandes, um den Bund 10 durch die Öffnung 11 hindurchzudrücken, wobei aber keine Möglichkeit besteht, daß sich der Klemmbügel 3 von selbst wieder über den Bund 10 zurückbewegt. Es ist daher vorgesehen, daß der Durchmesser D1 des Bundes 10 gleich groß oder geringfügig größer ist als der Durchmesser D2 der Öffnung 11. Um die Kraft zum Durchdrüken des Bundes 10 durch die Öffnung 11 nicht allzu groß ansteigen zu lassen, sollte der Durchmesser D1 des Bundes 10 um maximal 0,4 mm größer sein als der Durchmesser D2 der Öffnung 11. Sinnvoll ist ein Durchmesserunterschied von 0,2 mm, da dann ohne allzu großen Aufwand entsprechende Toleranzen eingehalten werden können.

Vorstehend wurde von gegenseitig aufeinander angepaßten Durchmessern im Bereich des Bundes 10 und der Öffnung 11 gesprochen. Es ist aber grundsätzlich auch denkbar, beim Bund 10 und/oder bei der Öffnung 11 einen von der Kreisform abweichenden Umfangsverlauf vorzusehen, wobei dann eben darauf zu achten ist, daß der Umfangsverlauf des Bundes 10 geringfügig größer ist als der Umfangsverlauf der im Klemmbügel 3 ausgebildeten Öffnung 11. Es sind aber Kombinationen dieser Maßnahmen möglich, wenn nämlich im Bereich des Bundes 10 oder im Bereich der Öffnung 11 eine entsprechend kreisförmige Ausbildung und beim gegenüberliegenden Abschnitt, also bei der Öffnung 11 oder dem Bund 10, ein von der Kreisform abweichender Umfangsverlauf vorgesehen ist.

Bei den gezeigten Ausführungsvarianten einer Schraube ist ferner vorgesehen, daß an den Bund 10 anschließend eine in Richtung zum freien Ende der Schraube 1 hin konische Abfasung 12 vorgesehen ist.

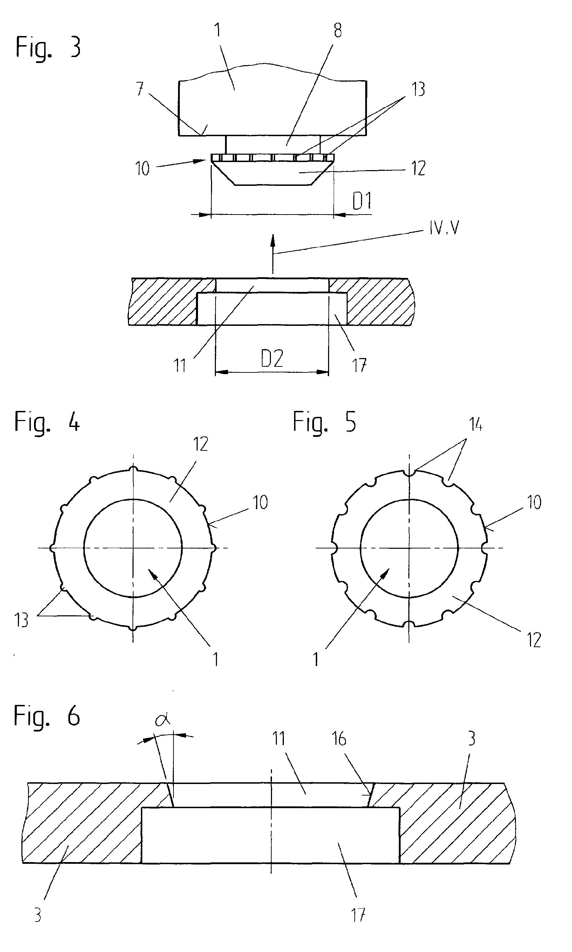

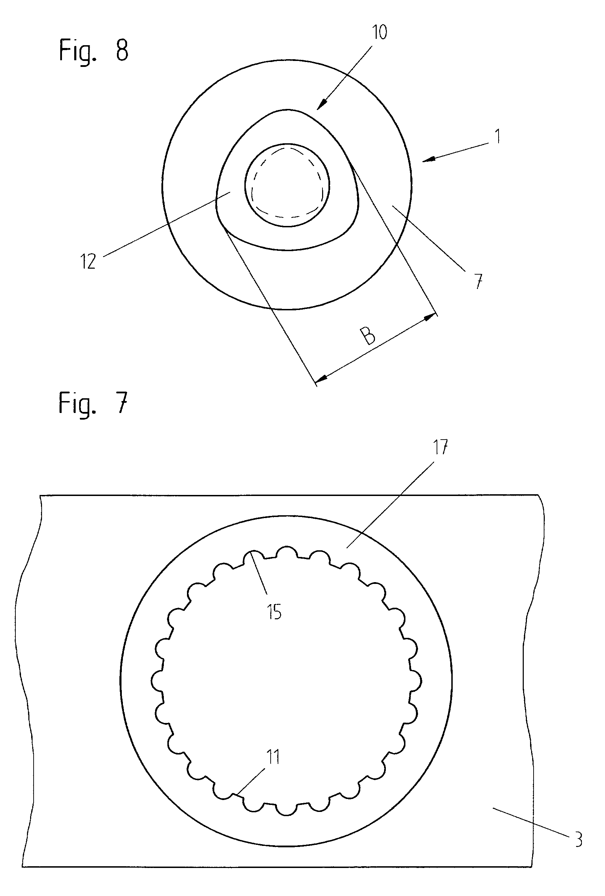

Aus den Fig. 3, 4, 5 und 7 ist ersichtlich, daß der Bund 10 an seinem Außenumfang und/oder der Klemmbügel 3 an der Innenbegrenzung der Öffnung 11 mehrere oder eine Vielzahl von Rippen 13, Riefen, Vertiefungen 14, Rillen, Ausnehmungen, eine Rändelung oder dergleichen aufweist. Solche Ausbildungen können die erforderlichen Kräfte zum Eindrücken des Bundes 10 in die Öffnung 11 am Klemmbügel 3 verringern.

Eine weitere Möglichkeit ist aus Fig. 6 ersichtlich. Dort weist die Öffnung 11 im Klemmbügel 3 eine in Achsrichtung gesehen konische Begrenzung 16 auf, welche beispielsweise mit der Mittelachse einen Winkel α einschließt. Mit einer Ausgestaltung nach Fig. 6 wäre auch eine Ausführung kombinierbar, bei welcher auch der Bund 10 an der Schraube 1 in gleicher Weise mit einer in Achsrichtung gesehen konischen Begrenzung ausgeführt wird. Es sind aber auch hier Kombinationen mit allen anderen Ausführungsvarianten denkbar.

Bei der Ausgestaltung nach Fig. 8 ist ersichtlich, daß der Bund 10 an der Schraube 1 und gegebenenfalls auch die daran anschließende Abfasung 12 eine unrunde Außenkontur, z.B. nach Art eines Gleichdicks aufweisen. In der Zeichnung ist eine Ausgestaltung aufgezeigt, bei welcher eine trilobulare Außenkontur vorgesehen wird. Es ist aber auch denkbar, wie strichliert in Fig. 8 aufgezeigt, daß der Bund 10 nach Art eines Gleichdicks mit der Abmessung B ausgebildet ist, wobei das unmittelbare freie Ende der Schraube, also die konische Abfasung 12, in einen kreisförmigen Endbereich übergeht. Auf gleiche Weise wie bei der Ausbildung des Bundes 10 wäre auch eine entsprechende Ausbildung der Öffnung 11 im Klemmbügel 3 denkbar, wobei es bei einer solchen Anordnung unter Umständen nur in einer bestimmten Verdrehlage der Schraube 1 gegenüber dem Klemmbügel 3 möglich ist, den Klemmbügel 3 aufzudrücken, wobei dann in praktisch allen anderen Verdrehstellungen eine gegenseitige Verriegelung durch die unrunde Ausgestaltung gewährleistet ist.

In vorteilhafter Weise wird der Klemmbügel 3 aus einem federelastischen Material, z.B. aus Federstahl, gefertigt. Im Rahmen der Erfindung ist es natürlich auch möglich, für den Klemmbügel 3 und auch für die Schraube 1 andere Materialien einzusetzen. So wäre es durchaus auch denkbar, beispielsweise eine Schraube 1 aus einem gegebenenfalls faserverstärkten Kunststoffmaterial zu fertigen und den Klemmbügel 3 ebenfalls aus Kunststoff auszubilden oder aber aus einem Metall. Wenn es ausschließlich um die Halterung eines eingeschobenen Drahtes 4 oder eines entsprechenden Stabes geht, dann wäre selbstverständlich auch eine Konstruktion denkbar, bei welcher der Klemmbügel aus Kunststoff gefertigt wird.

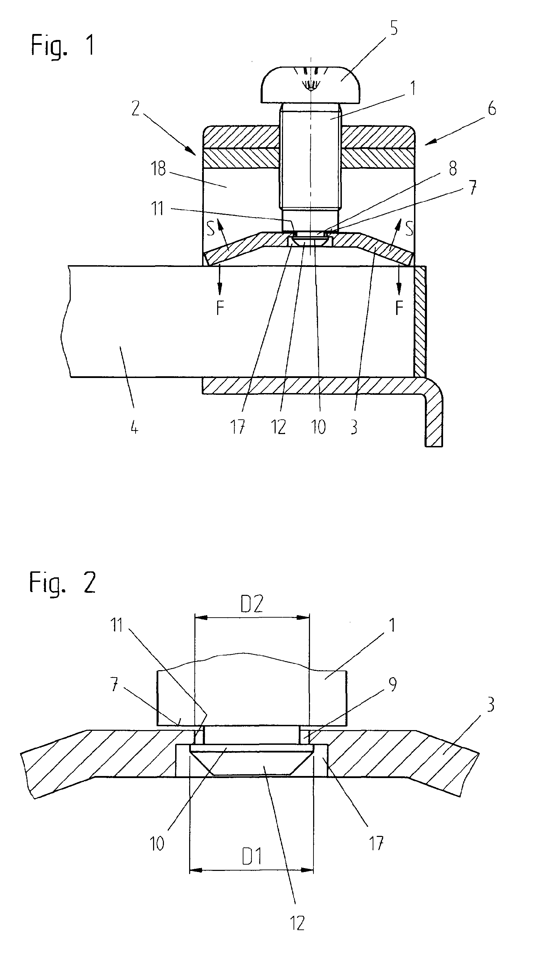

Gerade bei den Darstellungen gemäß den Fig. 1 bis 3 ist ersichtlich, daß zur gegenseitigen Verbindung zwischen Schraube und Klemmbügel 3 nur ein sehr begrenzter Platzbedarf erforderlich ist. An der Unterseite des Klemmbügels 3 ist eine Vertiefung 17 vorgesehen, welche den Bund 10 samt der gegebenenfalls anschließenden Abfasung 12 vollständig aufnimmt. Es ist dadurch die gegenseitige Verbindung zwischen Schraube 1 und Klemmbügel 3 selbst bei entsprechend starker notwendiger Verspannung des eingesetzten Drahtes 4 nicht hindernd im Wege.

Durch die besondere konstruktive Gestaltung des freien Endes der Schraube und auch des Klemmbügels 3 ist ein Montageverfahren einsetzbar, welches gegenüber bisherigen Fertigungsverfahren von Schraubklemmen wesentliche Verbesserungen und Vorteile mit sich bringt. Nach der vorliegenden Erfindung wird der Klemmbügel 3 verdrehsicher in Achsrichtung der Öffnung 11 unter Einsatz eines Hilfswerkzeuges verschiebesicher innerhalb der Schraubklemme 2 entsprechend der endgültigen Lage derselben eingesetzt. Dieses Hilfswerkzeug hat eine ähnliche Funktion wie dann anschließend der eingeschobene Draht 4, wobei aber das Hilfswerkzeug beispielsweise im Querschnitt rechteckig ausgebildet sein soll, um eine ordnungsgemäße Auflage des Klemmbügels 3 beim Montagevorgang zu erreichen. Es wird also der Klemmbügel 3 in die auch aus Fig. 1 ersichtliche Stellung gebracht. Die Schraube 1 wird dann durch die Gewindebohrung an der oberen Begrenzung des Klemmkörpers 18 eingedreht. Der Bund 10 am freien Ende der Schraube 1 wird dann durch Drehen der Schraube 1 und somit mit einem der Gewindesteigung entsprechenden Vorschub in die Öffnung 11 des Klemmbügels 3 so weit eingedrückt, bis der Klemmbügel 3 mit seiner Öffnung 11 in den Schaftabschnitt 8 verringerten Durchmessers hinter dem Bund 10 einrastet. Der Klemmbügel 3 ist damit bereits verliersicher am freien Ende der Schraube 1 montiert. Es wird daran anschließend die Schraube 1 mit einigen Umdrehungen wiederum zurückgedreht, bis der Anpreßdruck auf das eingesetzte Hilfswerkzeug nicht mehr vorhanden ist, so daß das Hilfswerkzeug herausgezogen werden kann. Es ist somit ein Montageverfahren durchführbar, welches ohne zusätzliche Arbeitsverfahren und Arbeitseinrichtungen durchgeführt werden kann.

## Patentansprüche

1. Schraube für eine Schraubklemme mit einer in einem Schaftabschnitt verringerten Durchmessers in axialer Richtung verschiebesicher, jedoch relativ zur Schraube verdrehbar gehaltenen Scheibe oder einem Klemmbügel, **dadurch gekennzeichnet, daß** die Scheibe oder der Klemmbügel (3) vom einen Ende der Schraube (1) her über einen gegenüber dem Schaftabschnitt (8) verringerten Durchmessers größeren Bund (10) aufgeschoben ist, wobei der Durchmesser (D1) und/oder der Umfangsverlauf des Bundes (10) geringfügig größer ist als der Durchmesser (D2) und/oder der Umfangsverlauf einer in der Scheibe oder dem Klemmbügel (3) ausgebildeten Öffnung (11).

2. Schraube nach Anspruch 1, **dadurch gekennzeichnet, daß** der Schaftabschnitt (8) verringerten Durchmessers wesentlich kleiner ist als der Durchmesser (D1) und/oder der Umfangsverlauf des Bundes (10).

3. Schraube nach Anspruch 1, **dadurch gekennzeichnet, daß** der Durchmesser (D1) des Bundes (10) um bis zu 0,4 mm größer ist als der Durchmesser (D2) der Öffnung (11) in der Scheibe oder dem Klemmbügel (3).

4. Schraube nach Anspruch 1, **dadurch gekennzeichnet, daß** an den Bund (10) in Richtung zum freien Ende der Schraube (1) hin eine konische Abfasung (12) anschließt.

5. Schraube nach Anspruch 1 und einem der vorstehenden Ansprüche, **dadurch gekennzeichnet, daß** der Bund (10) an seinem Außenumfang und/oder die Scheibe oder der Klemmbügel (3) an der Innenbegrenzung der Öffnung (11) mehrere oder eine Vielzahl von Rippen (13), Riefen, Vertiefungen (14), Rillen (15), Ausnehmungen, eine Rändelung oder dergleichen aufweisen.

6. Schraube nach Anspruch 1 und einem der vorstehenden Ansprüche, **dadurch gekennzeichnet, daß** der Bund (10) an der Schraube (1) und/oder die Öffnung (11) an der Scheibe oder am Klemmbügel (3) eine in Achsrichtung gesehen konische Begrenzung (16) aufweisen.

7. Schraube nach Anspruch 1 und einem der vorstehenden Ansprüche, **dadurch gekennzeichnet, daß** der Bund (10) an der Schraube (1) gegebenenfalls samt der Abfasung (12) und/oder die Öffnung (11) in der Scheibe oder im Klemmbügel (3) eine unrunde Außenkontur, z.B. nach Art eines Gleichdicks, aufweisen.

8. Schraube nach Anspruch 7, **dadurch gekennzeichnet, daß** der Bund (10) an der Schraube (1) gegebenenfalls samt der Abfasung (12) und/oder die Öffnung (11) in der Scheibe oder im Klemmbügel (3) eine trilobulare Außenkontur aufweisen.

9. Schraube nach einem der Ansprüche 1 bis 8, **dadurch gekennzeichnet, daß** der Klemmbügel (3) aus einem federelastischen Material, z.B. aus Federstahl, gefertigt ist.

10. Schraube nach einem der Ansprüche 1 bis 9, **dadurch gekennzeichnet, daß** an der Unterseite der Scheibe oder des Klemmbügels (3) eine Vertiefung (17) zur vollständigen Aufnahme des Bundes (10) an der Schraube (1) samt der gegebenenfalls anschließenden Abfasung (12) ausgebildet ist.

11. Verfahren zur Montage einer Scheibe oder eines Klemmbügels am freien Ende einer mit einem Schaftabschnitt verringerten Durchmessers und einem Bund ausgeführten Schraube nach den Ansprüchen 1 bis 10 innerhalb einer Schraubklemme, **dadurch gekennzeichnet, daß** die Scheibe oder der Klemmbügel (3) verdrehsicher und in Achsrichtung der Öffnung (11) unter Einsatz eines Hilfswerkzeuges verschiebesicher innerhalb der Schraubklemme (2) entsprechend der endgültigen Lage derselben eingesetzt wird, daß die Schraube (1) mit ihrem Gewindeabschnitt in eine an einem Klemmkörper (18) der Schraubklemme (2) vorgesehene Gewindebohrung eingedreht wird, und daß der Bund (10) der Schraube (1) durch Drehen der Schraube (1) und somit mit einem der Gewindesteigung entsprechenden Vorschub in die Öffnung des Klemmbügels (3) so weit eingedrückt wird, bis die Scheibe oder der Klemmbügel (3) mit seiner Öffnung in dem Schaftabschnitt (8) verringerten Durchmessers hinter dem Bund (10) einrastet.

12. Verfahren nach Anspruch 11, **dadurch gekennzeichnet, daß** die Schraube (1) nach dem Einrasten der Scheibe oder des Klemmbügels (3) in dem Schaftabschnitt (8) verringerten Durchmessers bis zum Lösen des Anpreßdruckes an einem eingesetzten Hilfswerkzeug zurückgedreht und dann das Hilfswerkzeug herausgezogen wird.
